(19)

Europäisches Patentamt

European Patent Office

Office européen des brevets

(11) **EP 4 407 454 A1**

(12) **EUROPEAN PATENT APPLICATION**
published in accordance with Art. 153(4) EPC

(43) Date of publication:
**31.07.2024 Bulletin 2024/31**

(21) Application number: **22871505.8**

(22) Date of filing: **22.06.2022**

(51) International Patent Classification (IPC):
**G06F 9/50** (2006.01)

(52) Cooperative Patent Classification (CPC):
**G06F 7/523; G06F 9/50; G06F 13/28; G06F 15/17; G06F 17/16;** Y02D 10/00

(86) International application number:
**PCT/CN2022/100301**

(87) International publication number:
**WO 2023/045444 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2021 CN 202111131264**

(71) Applicant: **Cambricon Technologies Corporation Limited**
**Beijing 100191 (CN)**

(72) Inventors:
• **SUN, Zheng**
  **Beijing 100191 (CN)**

• **ZHENG, Liutao**
  **Beijing 100191 (CN)**
• **LI, Ming**
  **Beijing 100191 (CN)**
• **DAI, Wenjuan**
  **Beijing 100191 (CN)**
• **HU, Zhenghua**
  **Beijing 100191 (CN)**
• **CHEN, Zhize**
  **Beijing 100191 (CN)**
• **ZHENG, Yichen**
  **Beijing 100191 (CN)**

(74) Representative: **Huang, Liwei**
**Cäcilienstraße 12**
**40597 Düsseldorf (DE)**

(54) **COMPUTING DEVICE AND METHOD FOR PERFORMING BINARY OPERATION OF MULTI-DIMENSIONAL DATA, AND RELATED PRODUCT**

(57) The present disclosure discloses a computing apparatus configured to perform a binary operation on multi-dimensional data, a method for performing a binary operation by using a computing apparatus, and related products. The computing apparatus is included in a combined processing apparatus. The combined processing apparatus further includes an interface apparatus and other processing apparatus. The computing apparatus interacts with other processing apparatus to jointly complete a computing operation specified by a user. The combined processing apparatus further includes a storage apparatus. The storage apparatus is connected to the computing apparatus and other processing apparatus respectively and is configured to store data of the computing apparatus and other processing apparatus. The disclosed scheme may reduce the number of data exchange and loading, relieve throughput pressure, and improve processing efficiency of a machine by rationally allocating the loading frequency of operation data.

FIG. 2

EP 4 407 454 A1

**Description**

**CROSS REFERENCE OF RELATED APPLICATION**

The present application claims priority to Chinese Patent Application No. 202111131264.7 with the title of "Computing Apparatus and Method for Performing Binary Operation on Multi-dimensional Data, and Related Product" and filed on September 26, 2021.

**TECHNICAL FIELD**

The present disclosure generally relates to the field of data processing. More specifically, the present disclosure relates to a computing apparatus configured to perform a binary operation on multi-dimensional data, a method for performing a binary operation by using a computing apparatus, a chip, and a board card.

**BACKGROUND**

Binary operation of multi-dimensional data, such as matrix multiplication and convolution operations, is one of common operations in mathematics and engineering fields. For example, intensive matrix multiplication and convolution operations are involved in deep learning algorithms that have been rapidly developed in recent years. Taking machine learning in the current field of artificial intelligence as an example, many computing tasks involve large-scale matrix multiplication operations and convolution operations, especially large-scale operations of multi-dimensional data, including, for example, matrix multiplication operations on weight matrices and input vectors in a fully connected layer and convolution operations on input vectors and convolution kernels in a convolution layer. It may be conceived that the larger the data volume and scale involved in the operation, the higher the requirement on storage volume of a computing platform (especially an on-chip system).

In the existing operation, a processor such as a central processing unit (CPU) or a graphics processing unit (GPU) is usually used. However, since the processor is limited by the resource capacity of an internal register, the large amount of data processing may lead to a lot of data interaction between the processor and an external memory. Since a bandwidth of an input/output ("I/O") bus between the processor and the external memory is limited, a serious I/O bottleneck is likely to occur, thereby causing delays in data transfer and greatly reducing the efficiency of parallel operations. Further, not only the bandwidth limitation of the I/O bus will become the bottleneck of system performance, but also the large amount of I/O access between the processor and the external memory will bring adverse effects on computing and power consumption overhead.

**SUMMARY**

In order to at least partly solve one or more technical problems mentioned in the background, a scheme of the present disclosure provides a computing apparatus configured to perform a binary operation on multi-dimensional data, a method for performing a binary operation by using a computing apparatus, a chip, and a board card.

A first aspect of the present disclosure discloses a computing apparatus configured to perform a binary operation on multi-dimensional data, where the computing apparatus includes a plurality of IPU (intelligent processing unit) cores and a memory core, and first data and second data involved in the binary operation are split into data blocks according to a specified dimension and are allocated on the plurality of IPU cores for operation processing, where the IPU cores are configured to: load a first data block of the first data from the memory core at a first frequency; load a second data block of the second data from the memory core at a second frequency, where the second frequency is R times of the first frequency, and R>1; and reuse each first data block of the first data R times to perform the binary operation with each respective second data block of the second data that are loaded R consecutive times.

A second aspect of the present disclosure provides a chip, including the computing apparatus of the first aspect.

A third aspect of the present disclosure provides a board card, including the chip of the second aspect.

A fourth aspect of the present disclosure provides a method for performing a binary operation on multi-dimensional data by using the computing apparatus of the first aspect.

By the computing apparatus provided above, the method for performing the operation by using the computing apparatus, the chip, and the board card, this disclosure embodiment provides a computing apparatus supporting a binary operation on multi-dimensional data, which may reasonably allocate data read frequency by optimizing a data splitting method, thereby improving operation efficiency of a machine. Further, when applied to a multi-core architecture, this disclosure embodiment may effectively reduce frequent data exchange and loading, avoid I/O bottlenecks, and reduce power consumption overhead.

## BRIEF DESCRIPTION OF DRAWINGS

By reading the following detailed description with reference to drawings, the above and other objects, features and technical effects of exemplary implementations of the present disclosure will become easier to understand. In the drawings, several implementations of the present disclosure are shown in an exemplary but not restrictive manner, and the same or corresponding reference numerals indicate the same or corresponding parts.

FIG. 1 shows a structural diagram of a board card according to an embodiment of the present disclosure.
FIG. 2 shows a structural diagram of a combined processing apparatus according to an embodiment of the present disclosure.
FIG. 3 shows a schematic diagram of an internal structure of a multi-core computing apparatus according to an embodiment of the present disclosure.
FIG. 4 exemplifies how a cluster direct memory access (CDMA) unit works.
FIG. 5 shows a splitting diagram of a matrix multiplication operation for general panel-panel multiplication (GEPP).
FIGs. 6a-6b show dividing and data loading diagrams of a multiplication operation of matrix blocks $A_b$ and $B_b$ on four computing clusters.
FIGs. 7a-7b show dividing and data loading diagrams of a multiplication operation of matrix sub-blocks $A_{bx}$ and $B_{by}$ on four IPU cores in the same computing cluster.
FIG. 8 shows a splitting diagram of a matrix multiplication operation scheme according to some embodiments of the present disclosure.
FIGs. 9a-9b are data loading diagrams at a computing cluster level or processor level where only a matrix B is updated according to some embodiments of the present disclosure.
FIG. 10 shows a matrix multiplication operation scheme diagram according to some embodiments of the present disclosure.
FIGs. 11a-11b are data loading diagrams at a computing cluster level or processor level where only a matrix A is updated according to some embodiments of the present disclosure.

## DETAILED DESCRIPTION

Technical solutions in embodiments of the present disclosure will be described clearly and completely hereinafter with reference to drawings in the embodiments of the present disclosure. Obviously, embodiments to be described are merely some rather than all embodiments of the present disclosure. All other embodiments obtained by those skilled in the art based on the embodiments of the present disclosure without creative efforts shall fall within the scope of protection of the present disclosure.

It should be understood that terms such as "first", "second", "third", and "fourth" appear in the claims, specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more of other features, entities, steps, operations, elements, components, and/or collections thereof.

It should also be understood that the terms used in the specification of the present disclosure are merely intended to describe a specific embodiment rather than to limit the present disclosure. As being used in the specification and the claims of the present disclosure, unless the context clearly indicates otherwise, singular forms such as "a", "an", and "the" are intended to include plural forms. It should also be understood that a term "and/or" used in the specification and the claims refers to any and all possible combinations of one or more of relevant listed items and includes these combinations.

As being used in the specification and the claims of the present disclosure, a term "if' may be interpreted as "when", or "once" or "in response to a determination" or "in response to a case where something is detected" depending on the context.

Specific implementations of the present disclosure will be described in detail in combination with drawings below.

## Exemplary hardware environment

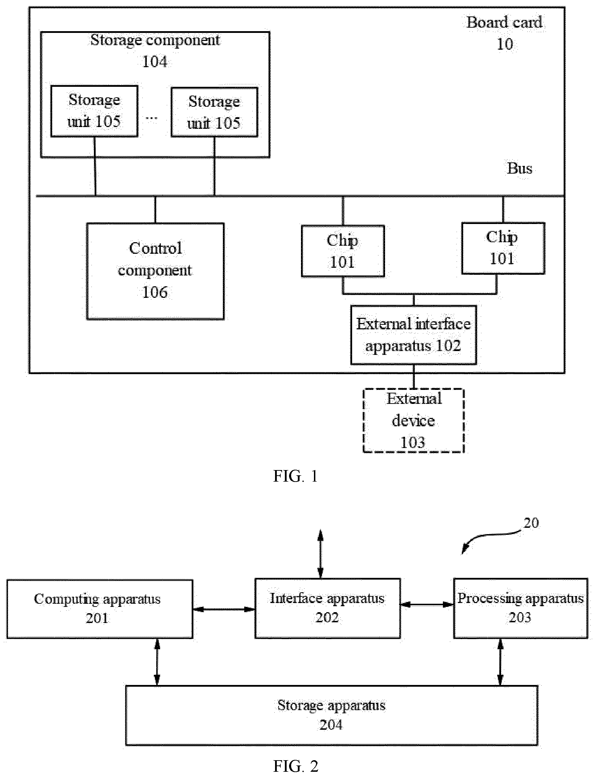

FIG. 1 is a structural diagram of a board card 10 according to an embodiment of the present disclosure. As shown in FIG. 1, the board card 10 includes a chip 101, which is a system on chip (SoC), or called an on-chip system, and integrates one or a plurality of combined processing apparatuses. The combined processing apparatus is an artificial intelligence operation unit, which is configured to support various deep learning algorithms and various machine learning algorithms and meet requirements of intelligent processing in complex scenarios in computer vision, speech, natural language processing, data mining, and other fields. In particular, deep learning technology is widely used in the field of cloud intelligence. A notable feature of cloud intelligence applications is the large amount of input data, which has high requirements for storage capacity and computing power of a platform. The board card 10 of this embodiment is suitable for the cloud intelligent applications and has huge off-chip storage, huge on-chip storage, and great computing power.

The chip 101 is connected to an external device 103 through an external interface apparatus 102. The external device 103 may be, for example, a server, a computer, a camera, a monitor, a mouse, a keyboard, a network card, or a WIFI interface. To-be-processed data may be transferred from the external device 103 to the chip 101 through the external interface apparatus 102. A computing result of the chip 101 may be transferred back to the external device 103 through the external interface apparatus 102. According to different application scenarios, the external interface apparatus 102 may have different interface forms, such as a peripheral component interface express (PCIe) interface, and the like.

The board card 10 further includes a storage component 104 configured to store data. The storage component 104 includes one or a plurality of storage units 105. The storage component 104 is connected to and transfers data to a control component 106 and the chip 101 through a bus. The control component 106 in the board card 10 is configured to regulate and control a state of the chip 101. As such, in an application scenario, the control component 106 may include a micro controller unit (MCU).

FIG. 2 is a structural diagram of a combined processing apparatus in the chip 101 of this embodiment. As shown in FIG. 2, a combined processing apparatus 20 includes a computing apparatus 201, an interface apparatus 202, a processing apparatus 203, and a storage apparatus 204.

The computing apparatus 201 is configured to perform an operation specified by a user and is mainly implemented as a single-core intelligent processor or a multi-core intelligent processor. The computing apparatus 201 is configured to perform computing of deep learning or machine learning and interacts with the processing apparatus 203 through the interface apparatus 202 to jointly complete the operation specified by the user.

The interface apparatus 202 is configured to transfer data and control instructions between the computing apparatus 201 and the processing apparatus 203. For example, the computing apparatus 201 may acquire input data from the processing apparatus 203 via the interface apparatus 202 and write the input data to an on-chip storage apparatus of the computing apparatus 201. Further, the computing apparatus 201 may acquire control instructions from the processing apparatus 203 via the interface apparatus 202 and write the control instructions to an on-chip control cache of the computing apparatus 201. Alternatively or optionally, the interface apparatus 202 may further read data in the storage apparatus of the computing apparatus 201 and then transfer the data to the processing apparatus 203.

The processing apparatus 203 serves as a general processing apparatus and performs basic controls, including, but are not limited to, moving data, starting and/or stopping the computing apparatus 201. According to different implementations, the processing apparatus 203 may be a central processing unit (CPU), a graphics processing unit (GPU), or one or more of other general and/or dedicated processors. These processors include, but are not limited to, a digital signal processor (DSP), an application specific integrated circuit (ASIC), a field-programmable gate array (FPGA), or other programmable logic components, discrete gate or transistor logic components, discrete hardware components, and the like. Moreover, the number of the processors may be determined according to actual requirements. As described above, with respect to the computing apparatus 201 of the present disclosure only, the computing apparatus 201 of the present disclosure may be viewed as having a single-core structure or an isomorphic multi-core structure. However, when considered together, the computing apparatus 201 and the processing apparatus 203 are viewed as forming a heterogeneous multi-core structure.

The storage apparatus 204 is configured to store to-be-processed data. The storage apparatus 204 may be a dynamic random access memory (DRAM), which is a double data rate (DDR) memory with a size of 16G or more than 16G generally. The storage apparatus 204 is configured to save data of the computing apparatus 201 and/or the processing apparatus 203.

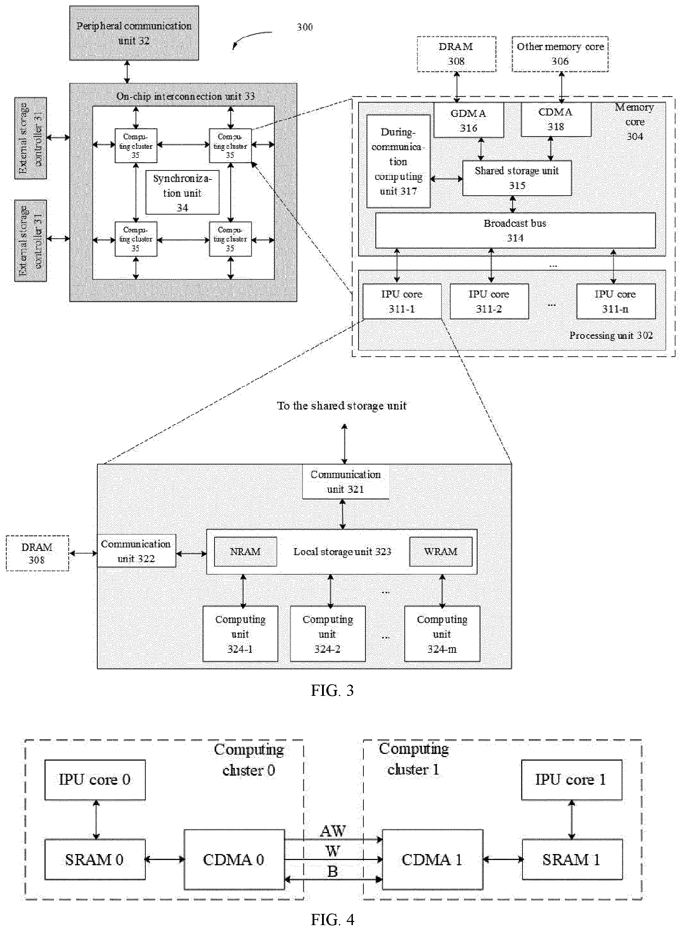

FIG. 3 is a schematic diagram of an internal structure of a computing apparatus 201 with multiple cores. A multi-core computing apparatus 300 is designed in a hierarchical structure. The multi-core computing apparatus 300 serves as an on-chip system and includes at least one computing cluster, where each computing cluster further includes a plurality of IPU cores. In other words, the multi-core computing apparatus 300 is composed by a hierarchy of on-chip system-computing cluster-IPU core.

In terms of a hierarchy of the on-chip system, as shown in FIG. 3, the multi-core computing apparatus 300 includes an external storage controller 31, a peripheral communication unit 32, an on-chip interconnection unit 33, a synchronization unit 34, and a plurality of computing clusters 35.

There may be a plurality of external storage controllers 31, two of which are exemplified in the figure. The external storage controllers are configured to, in response to access requests from the IPU cores, access an external memory, such as the DRAM 204 in FIG. 2, to read or write data off-chip. The peripheral communication unit 32 is configured to receive a control signal from the processing apparatus 203 through the interface apparatus 202 to start the computing apparatus 201 to perform a task. The on-chip interconnection unit 33 connects the external storage controller 31, the peripheral communication unit 32, and the plurality of computing clusters 35 and is configured to transfer data and control signals among the units. The synchronization unit 34 is a global barrier controller (GBC) and is configured to coordinate a work progress of each computing cluster to ensure synchronization of information. The plurality of computing clusters 35 are computing cores of the multi-core computing apparatus 300, four of which are exemplified in the figure. With the development of hardware, the multi-core computing apparatus 300 of the present disclosure may further include 8, 16, 64, or even more computing clusters 35. The computing clusters 35 are configured to efficiently perform deep learning algorithms. The plurality of computing clusters 35 may form a grid structure for circular communication; in other words, a grid interconnection circuit is provided between the plurality of computing clusters.

In terms of a hierarchy of the computing clusters, as shown in the upper right corner of FIG. 3, each computing cluster 35 includes a processing unit 302 and a memory core (MEM core) 304. The processing unit 302 performs various computing tasks. In some implementations, the processing unit may be a multi-core architecture, for example, including a plurality of IPU (intelligence processing unit) cores 311-1~311-n, so as to complete, for example, a large-scale vector computing task. The present disclosure does not limit the number of the IPU cores 311.

An internal architecture of the IPU core 311 is shown below FIG. 3. In each IPU core 311, there are a plurality of computing units 324-1~324-m configured to perform a computing task and a local storage unit 323 required for performing the computing task.

The computing units 324 are basic on-chip tensor computing units, which include, but are not limited to, vector operation units, tensor operation units configured to perform matrix multiplication, operation units configured to directly perform convolution operations, or convolution computing units that integrate img2col (image to column) and gemm (general matrix multiply).

A local storage unit 323 may be used as a cache level (such as a level 1 cache (L1 cache)) within the computing clusters 35, which may include a neuron storage unit (neuron random access memory (RAM), NRAM) and a weight storage unit (weight RAM, WRAM). The NRAM is configured to store input neuron, output neuron, and an intermediate result after computing. The WRAM is configured to store a convolution kernel of a deep learning network, which is a weight. It is required to be explained that the local storage unit 323 may further include various communication units to exchange data with an external memory. For example, the local storage unit 323 may include a communication unit 321 to communicate with a shared storage unit 315 in the memory core 304. The communication unit 321 may be, for example, a move direct memory access (MVDMA) unit. The local storage unit 323 may also include a communication unit 322 to exchange data with an off-chip memory, for example, a dynamic random access memory (DRAM) 308. The communication unit 322 may be, for example, an input/output direct memory access (IODMA) unit. The IODMA 322 controls memory access between the NRAM/WRAM in the local storage unit 323 and the DRAM 308. The MVDMA 321 is configured to control memory access between the NRAM/WRAM in the local storage unit 323 and the shared storage unit 315.

Continuing with the upper right figure of FIG. 3, the memory core 304 is mainly used for storage and communication. In other words, the memory core 304 is mainly used for storing shared data or intermediate results between the IPU cores 311 and performing communication between the computing clusters 35 and the DRAM 308, communication between the computing clusters 35, and communication between the IPU cores 311. In other embodiments, the memory core 304 is capable of performing a scalar operation and is used for performing the scalar operation to realize operation tasks in data communication.

The memory core 304 includes a large shared storage unit (SRAM) 315, a broadcast bus 314, a computing cluster direct memory access (CDMA) unit 318, and a global direct memory access (GDMA) unit 316, and a during-communication computing unit 317. The SRAM 315 plays the role of a high-performance data transfer station. Data reused among different IPU cores 311 in the same computing cluster 35 is not required to be acquired separately from the DRAM 308 through the IPU cores 311. Instead, the data is transferred among the IPU cores 311 through the SRAM 315. The memory core 304 is only required to quickly distribute the reused data from the SRAM 315 to the plurality of IPU cores 311, so as to improve inter-core communication efficiency and greatly reduce on-chip and off-chip input/output access.

The broadcast bus 314, the CDMA 318, and the GDMA 316 are configured to perform the communication between the IPU cores 311, the communication between the computing clusters 35, and data transfer between the computing clusters 35 and the DRAM 308, respectively. The above will be explained separately below.

The broadcast bus 314 is configured to complete high-speed communication between the IPU cores 311 in the computing clusters 35. The broadcast bus 314 of this embodiment supports inter-core communication modes, including unicast, multicast, and broadcast. The unicast refers to point-to-point (single IPU core-to-single IPU core) data transfer. The multicast refers to a communication mode in which a copy of data is transferred from the SRAM 315 to certain IPU cores 311. The broadcast refers to a communication mode in which a copy of data is transferred from the SRAM 315 to all IPU cores 311. The broadcast is a special case of the multicast.

Within each computing cluster 35, each IPU core 311 may initiate a broadcast to simultaneously broadcast data to a local storage unit 323 (such as NRAM or WRAM) of each core. Broadcasting the data to the NRAM and WRAM belongs to two data channels and may be performed concurrently, but at a certain time node, each IPU core may only initiate one broadcast; in other words, the broadcasts of the WRAM and NRAM may not be initiated in the same core at the same time.

The CDMA 318 is configured to control memory access of the SRAM 315 among different computing clusters 35 in the same computing apparatus 301. The GDMA 316 works with the external storage controller 31 to control memory access from the SRAM 315 to the DRAM 308 in the computing clusters 35 or read data from the DRAM 308 to the SRAM 315. It may be known from the above that communication between the DRAM 308 and the NRAM/ WRAM in the local storage unit 323 may be implemented through two channels. A first channel is to directly contact the DRAM 308 with the local storage unit 323 through the IODMA 322. A second channel is to transfer the data between the DRAM 308 and the SRAM 315 through the GDMA 316 first, and then to transfer the data between the SRAM 315 and the local storage unit 323 through the MVDMA 321. Although it seems that the second channel requires more components and has long data flows, in fact, in some embodiments, the bandwidth of the second channel is much greater than that of the first channel. Therefore, the communication between the DRAM 308 and the local storage unit 323 may be more efficient through the second channel. Embodiments of the present disclosure may select a data transfer channel according to hardware conditions.

In some embodiments, the memory core 304 may be used as a cache level (such as a level 2 cache (L2 cache)) within the computing clusters 35 to broaden communication bandwidth. Further, the memory core 304 may also complete communication with other computing clusters 35. The memory core 304 may realize, for example, communication functions such as broadcast, scatter, gather, reduce, and all-reduce between the computing clusters 35. The broadcast refers to distributing and broadcasting the same data to all computing clusters. The scatter refers to distributing different data to different computing clusters. The gather refers to gathering data of a plurality of computing clusters together. The reduce refers to sending a final result obtained by computing data of a plurality of computing clusters according to a specified mapping function to a certain computing cluster. The difference between the all-reduce and the reduce is that the final result of the latter is sent to only one computing cluster, while in the all-reduce, the final result is required to be sent to all computing clusters.

The during-communication computing unit 317 may be configured to complete computing tasks during the communication, such as the above-mentioned reduce and all-reduce, in the process of communication without the help of the processing unit 302, thereby improving communication efficiency and achieving the effect of "storage and computing in one unit". Depending on different hardware implementations, the during-communication computing unit 317 and the shared storage unit 315 may be integrated in the same or different components. This disclosure embodiment has no limitation on this respect, as long as functions and technical effects achieved are similar to those of this disclosure, the embodiments are within the scope of protection of this disclosure.

FIG. 4 is a schematic diagram that an IPU core intends to write data to an IPU core of another computing cluster to illustrate a working principle of the CDMA 318. In this application scenario, the same computing apparatus includes a plurality of computing clusters. For the convenience of illustration, only a computing cluster 0 and a computing cluster 1 are shown in the figure. The computing cluster 0 and the computing cluster 1 include a plurality of IPU cores, respectively. Similarly, for the convenience of illustration, the computing cluster 0 in the figure shows only an IPU core 0, and the computing cluster 1 in the figure shows only an IPU core 1. The IPU core 0 intends to write data to the IPU core 1.

First, the IPU core 0 sends a unicast write request to write the data to a local SRAM 0. A CDMA 0 serves as a master terminal, and a CDMA 1 serves as a slave terminal. The master terminal sends the write request to the slave terminal. In other words, the master terminal sends a write address AW and write data W and sends the data to an SRAM 1 of the computing cluster 1. Next, the slave terminal sends a write response B in response. Finally, the IPU core 1 of the computing cluster 1 sends a unicast read request to read the data from the SRAM 1.

**Exemplary matrix multiplication operation scheme**

Matrix multiplication operation may be generally expressed as $C_{M \times N} = A_{M \times K} * B_{K \times N}$, where M, K, and N are natural numbers. When both the M and N dimensions are large, but the K dimension is relatively small, a matrix multiplication operation of this scale is called general panel-panel multiplication (GEPP). At this time, splitting is mainly performed on the M dimension and N dimension, and is not suitable to be further performed on the K dimension. For example, when a leading dimension of a matrix A is K and K is less than one cache line, if the splitting is performed on the K dimension, a DDR bandwidth will drop sharply. For example, only a few gigabytes of bandwidth may be utilized in a total bandwidth of several hundred gigabytes, resulting in a lot of waste, and eventually performance will deteriorate sharply. The leading dimension refers to a row or column width of a matrix when the matrix is stored on an off-chip system in either row-major order or column-major order. For example, when the matrix is stored row by row in the off-chip system, the matrix is in row-major order, and the leading dimension of the matrix is the row width (which is the number of column elements) of the matrix. Similarly, when the matrix is stored column by column in the off-chip system, the matrix is in column-major order, and the leading dimension of the matrix is the column width (which is the number of row elements) of the matrix.

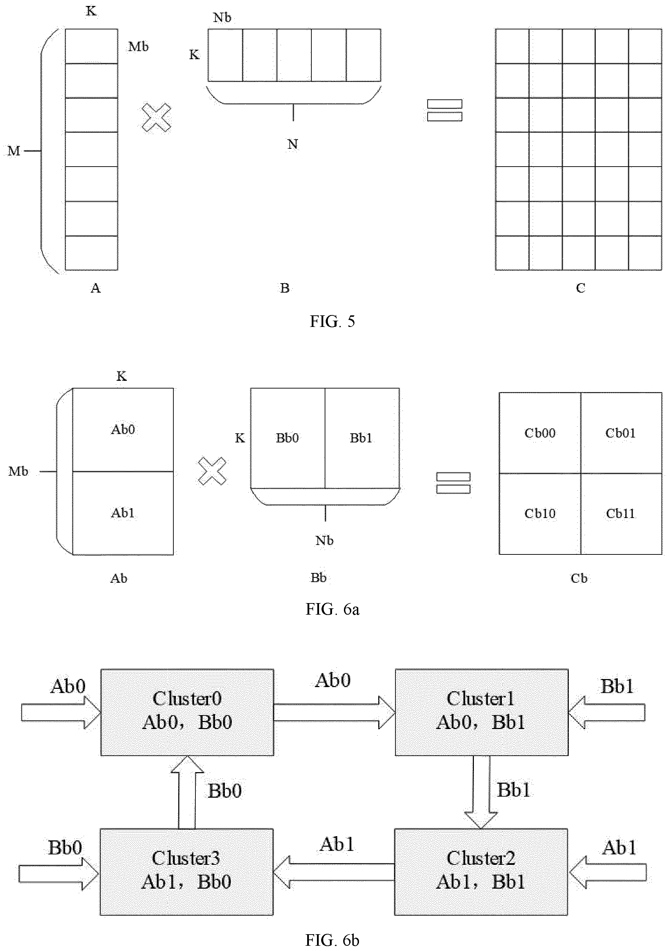

FIG. 5 is a splitting diagram of a matrix multiplication operation for GEPP.

As shown in the figure, a left-multiply matrix A is split in the M dimension and is not split in the K dimension, where $M_b$ is a size of a matrix block after splitting. A right-multiply matrix B is split in the N dimension and is not split in the K dimension, where $N_b$ is a size of a matrix block after splitting. A product result matrix C is obtained by performing a multiplication operation between each matrix block after splitting.

A matrix block obtained by splitting the left-multiply matrix A as described above is called $A_b$, whose size in the M dimension is $M_b$ and whose size in the K dimension remains K. A matrix block obtained by splitting the right-multiply matrix B as described above is called $B_b$, whose size in the N dimension is $N_b$ and whose size in the K dimension remains K.

When the above matrix operation is performed, for example, on the multi-core computing apparatus shown in FIG. 3, the operation is performed on a pair of split matrix blocks $A_b$ and $B_b$ each time; in other words, a matrix block in the result matrix C is computed each time. Further, the operation between each split matrix block $A_b$ and $B_b$ may be divided on the plurality of computing clusters.

FIGs. 6a-6b show dividing and data loading diagrams of a multiplication operation of matrix blocks $A_b$ and $B_b$ on four computing clusters.

As shown in FIG. 6a, $M_b$ is further divided in the M dimension, so that the matrix block $A_b$ is divided into two matrix sub-blocks $A_{b0}$ and $A_{b1}$; and $N_b$ is further divided in the N dimension, so that the matrix block $B_b$ is divided into two matrix sub-blocks $B_{b0}$ and $B_{b1}$. Splitting is not performed on the K dimension. Product results of two matrix blocks constitute a matrix block $C_b$, which is correspondingly divided into four matrix sub-blocks, where a computing cluster Cluster0 computes a sub-block $C_{b00}$ contributed by matrix sub-blocks $A_{b0}$ and $B_{b0}$, a computing cluster Cluster1 computes a sub-block $C_{b01}$ contributed by matrix sub-blocks $A_{b0}$ and $B_{b1}$, a computing cluster Cluster2 computes a sub-block $C_{b11}$ contributed by matrix sub-blocks $A_{b1}$ and $B_{b1}$, and a computing cluster Cluster3 computes a sub-block $C_{b10}$ contributed by matrix sub-blocks $A_{b1}$ and $B_{b0}$.

As shown in FIG. 6b, when performing an operation, each computing cluster loads a copy of input data from an external storage circuit, and then shares data of each computing cluster through circular communication. In detail, the Cluster0 loads $A_{b0}$ from an external storage circuit (such as the DRAM 308 in FIG. 3) to a storage circuit (such as the SRAM) within this computing cluster, the Cluster1 loads $B_{b1}$, the Cluster2 loads $A_{b1}$, and the Cluster3 loads $B_{b0}$. Then, the Cluster0 sends the $A_{b0}$ to the Cluster1, the Cluster1 sends the $B_{b1}$ to the Cluster2, the Cluster2 sends the $A_{b1}$ to the Cluster3, and the Cluster3 sends the $B_{b0}$ to the Cluster0. As such, each computing cluster obtains data required to compute the allocated sub-block.

Based on the architecture of the multi-core computing apparatus in FIG. 3, each computing cluster includes a plurality of IPU cores. Therefore, an operation of matrix sub-blocks assigned to each computing cluster may be further divided on the plurality of IPU cores within each computing cluster.

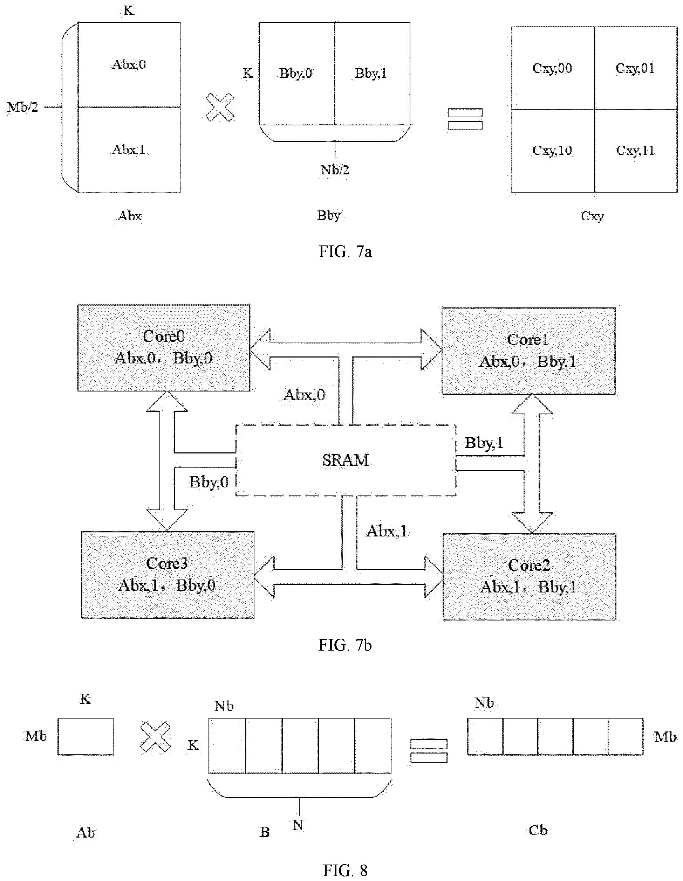

FIGs. 7a-7b show dividing and data loading diagrams of a multiplication operation of matrix sub-blocks $A_{bx}$ and $B_{by}$ on four IPU cores in the same computing cluster.

As shown in FIG. 7a, similar to dividing between the computing clusters, between a plurality of IPU cores in the same computing cluster, each matrix sub-block is split only on the M dimension and N dimension, and not on the K dimension. Taking a case where a computing cluster includes four IPU cores as an example, matrix sub-blocks allocated to ClusterX (X=0, 1, 2, 3) may be further split into matrix micro-blocks, which are denoted as:

$A_{bx} = \{ A_{bx,0}; A_{bx,1}\}$, $B_{by} = \{ B_{by,0}; B_{by,1}\}$; $C_{xy} = \{ C_{xy,00}; C_{xy,01}, C_{xy,10}, C_{xy,11}\}$, respectively.

At this time, an IPU core Core0 computes a micro-block $C_{bxy,00}$ contributed by matrix micro-blocks $A_{bx,0}$ and $B_{by,0}$, an IPU core Core1 computes a micro-block $C_{bxy,01}$ contributed by matrix micro-blocks $A_{bx,0}$ and $B_{by,1}$, an IPU core Core2 computes a micro-block $Cb_{xy,11}$ contributed by matrix micro-blocks $A_{bx,1}$ and $B_{by,1}$, and an IPU core Core3 computes a micro-block $C_{bxy,10}$ contributed by matrix micro-blocks $A_{bx,1}$ and $B_{hy,0}$.

As shown in FIG. 7b, after data is prepared on a memory core (SRAM/L2 cache) of a computing cluster, when performing an operation, IPU cores in the computing cluster may load the data as follows: the Core0 broadcasts the $A_{bx,0}$ from the L2 cache to NRAMs of the Core0 and the Core1, the Core 1 broadcasts the $B_{by,1}$ from the L2 cache to WRAMs of the Core1 and the Core2, the Core2 broadcasts the $A_{bx,1}$ from the L2 cache to NRAMs of the Core2 and the Core3, and the Core3 broadcasts the $B_{by,0}$ from the L2 cache to WRAMs of the Core3 and the Core0. As such, each IPU core obtains data required to compute the allocated matrix micro-block. Then, each IPU core performs a matrix multiplication operation, and after obtaining a result, each IPU core may directly store the result back to a corresponding position of the external storage circuit.

It may be known from the above operation and data loading process that every time data is loaded, whether it is the computing cluster level or the IPU core level, the data is required to be exchanged and loaded frequently between the same level, which undoubtedly increases IO burden. This problem also exists in other binary operations that apply the same operation pattern, such as convolution operations, where input data and convolution kernels are required to be exchanged and loaded frequently between processing units at the same level. Therefore, an optimization scheme is urgently needed to ease the IO burden of such operations.

**Exemplary matrix multiplication operation optimization scheme**

In view of this, this disclosure embodiment provides an operation scheme, which may reduce IO by the residence of either data in a binary operation. In detail, this disclosure embodiment provides a computing apparatus configured to perform a binary operation on multi-dimensional data, where the computing apparatus includes a plurality of IPU cores and a memory core, and first data and second data involved in the binary operation are split into data blocks according to a specified dimension and are allocated on the plurality of IPU cores for operation processing. In more detail, each IPU core is configured to: load a first data block of first data from the memory core at a first frequency; load a second data block of second data from the memory core at a second frequency, where the second frequency is R times of the first frequency, and R>1; and reuse each first data block of the first data R times to perform the binary operation with each respective second data block of the second data that are loaded R consecutive times. The resident technique of this disclosure embodiment may reduce the reading frequency of the resident side in the binary operation, thereby reducing the IO amount.

Optionally or additionally, the above resident technique may also be applied when a computing apparatus includes a plurality of computing clusters. In this computing apparatus, when each computing cluster includes the above plurality of IPU cores and the memory core, and a grid interconnection circuit is provided between the plurality of computing clusters, each computing cluster is assigned to perform part of the above binary operation. At this time, each computing cluster may be configured to: load a first data block of first data from an external storage circuit to a memory core within the computing cluster at a first frequency; and load a second data block of second data from the external storage circuit to the memory core within the computing cluster at a second frequency. As such, the reading frequency of the resident data may also be reduced at the computing cluster level, thus easing the IO burden.

In the following description, taking matrix multiplication as an example, the resident technique of this disclosure embodiment is described in detail based on the hardware architecture shown in FIG. 3, but those skilled in the art may understand that the technical principle described here may also be applied to other binary operations similar to matrix multiplication, and the hardware architecture applied is not limited to the specific example shown in FIG. 3.

For the matrix multiplication operation, the resident side may be a left-multiply matrix A or a right-multiply matrix B.

In this disclosure embodiment, to-be-operated left-multiply matrix A and to-be-operated right-multiply matrix B may still be split into a plurality of matrix blocks $A_b$ and a plurality of matrix blocks $B_b$ according to the splitting method shown in FIG. 5 above. Moreover, a multiplication operation of each pair of matrix blocks $A_b$ and $B_b$ is divided on four computing clusters as shown in FIG. 6a, and a multiplication operation of each pair of matrix sub-blocks $A_{bx}$ and $B_{by}$ is divided on four IPU cores as shown in FIG. 7a.

Without loss of generality, when the number of the computing clusters is CLm×CLn, a matrix multiplication operation of a left-multiply matrix block $A_b$ and a right-multiply matrix block $B_b$ may be assigned on these computing clusters as follows: each left-multiply matrix block is divided into Clm left-multiply matrix sub-blocks $A_{bx}$ by row dimension, where x=0,...,CLm-1; each right-multiply matrix block is divided into CLn right-multiply matrix sub-blocks $B_{by}$ by column dimension, where y=0,...,CLn-1; and each computing cluster is assigned to process a left-multiply matrix sub-block $A_{bx}$ and a right-multiply matrix sub-block $B_{by}$ in a row and column correspondence.

Optionally or additionally, when the number of a plurality of IPU core included in each computing cluster is CRm×CRn, a matrix multiplication operation of a left-multiply matrix sub-block $A_{bx}$ and a right-multiply matrix sub-block $B_{by}$ may be assigned on the plurality of IPU cores as follows: each left-multiply matrix sub-block is divided into CRm left-multiply matrix micro-blocks $A_{bx,i}$ by row dimension, where i=0,...,CRm-1; each right-multiply matrix sub-block is divided into CRn right-multiply matrix micro-blocks $B_{by,j}$ by column dimension, where j=0,...,CRn-1; and each IPU core is assigned to process a left-multiply matrix micro-block $A_{bx,i}$ and a right-multiply matrix micro-block $B_{by,j}$.

Although the dividing method of the operation is the same as the foregoing, the loading method of the matrix blocks and matrix sub-blocks adopts the resident technique of this disclosure embodiment.

FIG. 8 shows a splitting diagram of a matrix multiplication operation scheme according to some embodiments of the present disclosure.

As shown in the figure, a matrix block $A_b$ may be chosen to be resident, and a matrix block $B_b$ may be chosen to be cyclically loaded, so as to compute a result matrix block $C_b$. Each time the matrix block $B_b$ is loaded, the matrix block $B_b$ computes one block of the result matrix block $C_b$ together with the resident matrix block $A_b$. It may be seen that the frequency of loading the matrix block $B_b$ is $N_{BB}$ times of the frequency of loading the matrix block $A_b$, where

$$N_{BB} = \lceil N/N_b \rceil$$, representing the number of matrix blocks to which the matrix B is split.

Table 1 shows logical pseudocode of a matrix multiplication operation loop process according to some embodiments of the present disclosure.

$$\textbf{for } m = 0 : M_b : M - 1$$
$$\textit{updating submatrix of } A$$
$$\textbf{for } n = 0 : N_b : N - 1$$
$$\textit{updating submatrix of } B$$
$$\textbf{for } k = 0 : K - 1$$
$$C_{mn} = C_{mn} + A_{mk} * B_{kn}$$
$$\textbf{endfor}$$
$$\textit{download } C_{mn} \textit{ to global memory}$$
$$\textbf{endfor}$$
$$\textbf{endfor}$$

Table 1

As shown in the table, an outer loop is performed with a matrix block $A_b$ (whose size is $M_b$) of a matrix A as a stride; for each $A_b$, a middle loop is performed with a matrix block $B_b$ (whose size is $N_b$) of a matrix B as a stride; and specific computing of an inner loop is performed according to a K dimension.

Table 2 shows a computing pipeline diagram of a matrix multiplication operation. In this example, from the computing cluster level, a matrix block $A_j$ resides on a memory core, and matrix blocks $B_0,...,B_{n-1}$ are cyclically loaded. From the IPU core level, for a y-th IPU core in an x-th computing cluster, a matrix sub-block $A_{jx}$ may reside on a first storage circuit (such as NRAM) of the IPU core, and matrix sub-blocks $B_{0y},...,B_{n-1,y}$ may be cyclically loaded. As such, the IPU core may compute matrix multiplication results $C_{j0,xy},...,C_{j,n-1,xy}$ of the resident matrix sub-block $A_{jx}$ and the cyclically loaded matrix sub-blocks $B_{0y},...,B_{n-1,y}$, respectively. Operation results may be directly stored back to corresponding positions of the external storage circuit.

| Time step | Storage controller | X-th computing cluster, y-th IPU core | | |
|---|---|---|---|---|
| 0 | Update $A_j$ and $B_0$ in L2 cache | Update $B_{n-1,y}$ (from a previous round) in L1 cache | | |
| 1 | Update $B_1$ in L2 cache | Update $A_{jx}$ and $B_{0,y}$ in L1 cache | Compute $C_{j-1,n-1,xy}$ by matrix multiplication | |
| 2 | Update $B_2$ in L2 cache | Update $B_{1,y}$ in L1 cache | Compute $C_{j0,xy}$ by matrix multiplication | Restore $C_{j-1,n-1,xy}$ |
| 3 | Update $B_3$ in L2 cache | Update $B_{2,y}$ in L1 cache | Compute $C_{j1,xy}$ by matrix multiplication | Restore $C_{j0,xy}$ |
| ...... | ...... | Update $B_{3,y}$ in L1 cache | Compute $C_{j2,xy}$ by matrix multiplication | Restore $C_{j1,xy}$ |
| n-1 | Update $B_{n-1}$ in L2 cache | ...... | Compute $C_{j3,xy}$ by matrix multiplication | Restore $C_{j2,xy}$ |
| 0 | Update $A_{j+1}$ and $B_0$ in L2 cache | Update $B_{n-1,y}$ in L1 cache | ...... | Restore $C_{j3,xy}$ |
| 1 | Update $B_1$ in L2 cache | Update $A_{j+1,x}$ and $B_{0,y}$ in L1 cache | Compute $C_{j,n-1,xy}$ by matrix multiplication | ...... |
| 2 | | | | Restore $C_{j,n-1,xy}$ |

Table 2

As shown in the table 2, at time step 0, a storage controller of each computing cluster may control and update matrix blocks on a memory core. For example, $A_j$ and $B_0$ on the SRAM may be updated at the beginning of a loop. At this time, the y-th IPU core in the x-th computing cluster updates a last matrix sub-block $B_{n-1,y}$ from a previous loop accordingly.

Next, the matrix block $A_j$ resides. Therefore, at time steps 1 to n-1 of this loop, matrix blocks $B_0,...,B_{n-1}$ are updated in sequence. Accordingly, in the y-th IPU core in the x-th computing cluster, at time steps 1 to n-1 of this loop, a matrix sub-block $A_{jx}$ resides, and matrix sub-blocks $B_{0y},...,B_{n-1,y}$ are updated in sequence. As such, the IPU core may compute result matrix sub-blocks $C_{j0,xy},...,C_{j,n-1,xy}$ correspondingly.

At the beginning of a next loop, matrix blocks $A_{j+1}$ and $B_0$ on the SRAM may again be updated simultaneously. This process is repeated until all matrix blocks $A_b$ are traversed.

It may be clearly seen from the above computing pipeline that the loading frequency of the resident matrix is lower than that of non-resident matrix, thereby reducing the I/O amount.

Further, it may also be seen from the above computing pipeline that in both the computing cluster level and the IPU core level, there are time steps where two matrices in the operation are required to be updated simultaneously. For this update step, the data may be loaded in the way described above.

In some embodiments, for the computing cluster level, each computing cluster loads a copy of input data from an external storage circuit, and then shares data of each computing cluster through circular communication. In detail, when a first data block (such as a matrix A) and a second data block (such as a matrix B) are loaded simultaneously, each computing cluster may load one data block selected from the first data block and the second data block from the external storage circuit; each computing cluster may transfer the one data block to other computing clusters that are assigned to process the one data block selected from the first data block and the second data block through an interconnection circuit; and each computing cluster may acquire the other data block from another computing cluster that is assigned to process the other data block selected from the first data block and the second data block through the interconnection circuit.

Taking the above example as an example, a Cluster0 loads $A_{i0}$ from an external storage circuit (such as the DRAM 308 in FIG. 3) to a storage circuit (such as the SRAM) within this computing cluster, a Cluster1 loads $B_{j1}$, a Cluster2 loads An, and a Cluster3 loads $B_{j0}$. Then, the Cluster0 sends the $A_{i0}$ to the Cluster1, the Cluster1 sends the $B_{j1}$ to the Cluster2, the Cluster2 sends the $A_{i1}$ to the Cluster3, and the Cluster3 sends the $B_{j0}$ to the Cluster0. As such, each computing cluster updates two matrix sub-blocks assigned by the computing simultaneously.

For the IPU core level, each IPU core in the same computing cluster may broadcast data on a memory core to a specified IPU core by using a broadcast method, so as to realize data loading. In detail, when a first data block (such as a matrix A) and a second data block (such as a matrix B) are loaded simultaneously, each IPU core may send a broadcast request for broadcasting one selected from the first data block and the second data block from the memory core to the IPU core and other IPU cores that are assigned to perform operation processing on the broadcast data block; and each IPU core may receive the broadcast data block and the other one selected from the first data block and the second data block that is broadcast by the request of another IPU core.

Taking the above example as an example, a Core0 broadcasts $A_{bx, 0}$ from an L2 cache to NRAMs of the Core0 and a Core1, the Core1 broadcasts $B_{by, 1}$ from the L2 cache to WRAMs of the Core1 and a Core2, the Core2 broadcasts $A_{bx, 1}$ from the L2 cache to NRAMs of the Core2 and a Core3, and the Core3 broadcasts $B_{by, 0}$ from the L2 cache to WRAMs of the Core3 and the Core0. As such, each IPU core updates two matrix micro-blocks assigned by the computing simultaneously.

In the above computing pipeline, the matrix A will reside in most of the time steps, and the matrix B is required to be cyclically loaded. In some embodiments of the present disclosure, a data path between processing units at different levels may be fully utilized to optimize a data loading process.

In detail, for the computing cluster level, computing clusters may have a network communication structure. For example, four computing clusters may form a bidirectional circular communication structure, so as to accelerate data loading by using this communication structure. In some embodiments, when only a second data block (such as a matrix B) is loaded, each computing cluster assigned to perform operation processing on the same second data block may load a part of the second data block from an external storage circuit to a memory core within the computing cluster; and each computing cluster may exchange each loaded part of the second data block with other computing clusters that are assigned to perform operation processing on this second data block through an interconnection circuit, where various parts loaded by respective computing clusters from the external storage circuit constitute a complete second data block.

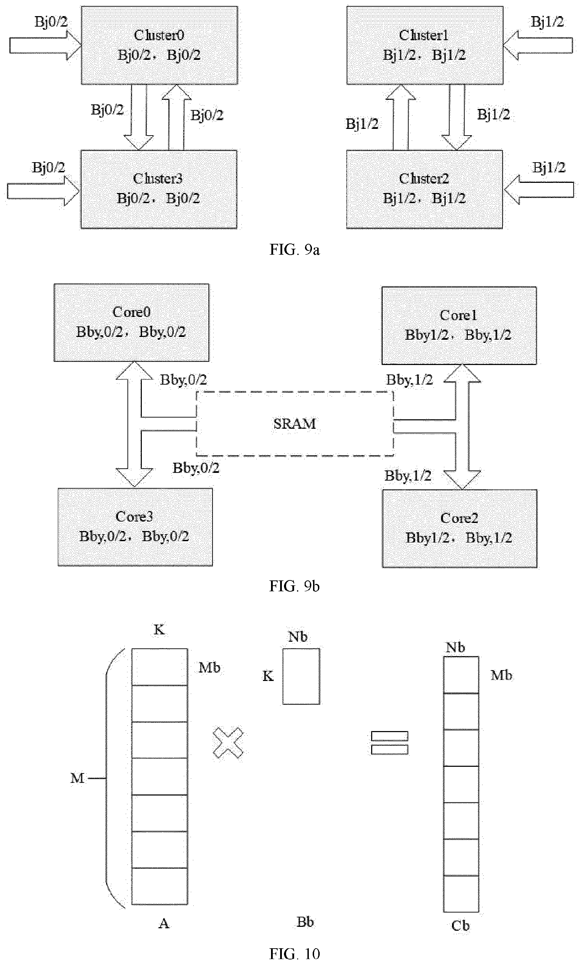

FIG. 9a shows a data loading diagram at a computing cluster level where only a matrix B is updated according to some embodiments of the present disclosure. Taking the above example as an example, when a matrix A already resides and matrix sub-blocks of the matrix B are updated cyclically, following steps may be performed: a Cluster0 loads half of $B_{j0}$ from an external storage circuit (such as the DRAM 308 in FIG. 3) to a storage circuit (such as the SRAM) within this computing cluster, a Cluster3 loads the other half of the $B_{j0}$, a Cluster1 loads half of $B_{j1}$, and a Cluster2 loads the other half of the $B_{j1}$. Then, the Cluster0 and the Cluster3 exchange parts of the $B_{j0}$ in their memory cores with each other, and a complete $B_{j0}$ is formed in both the Cluster0 and the Cluster3; and the Cluster1 and the Cluster2 exchange parts of the $B_{j1}$ in their memory cores with each other, and a complete $B_{j1}$ is formed in both the Cluster1 and the Cluster2. As such, each computing cluster completes the update of the matrix sub-blocks of the matrix B.

For the IPU core level, IPU cores in the same computing cluster may accelerate data loading by using a broadcast channel. In some embodiments, when only a second data block (such as a matrix B) is loaded, each IPU core assigned to perform operation processing on the same second data block may send a broadcast request for broadcasting a part of the second data block from a memory core to all IPU cores that are assigned to perform operation processing on the second data block, where various parts that are broadcast by the requests of respective IPU cores constitute a complete second data block.

FIG. 9b shows a data loading diagram at an IPU core level where only a matrix B is updated according to some embodiments of the present disclosure. Taking the above example as an example, when a matrix A already resides and matrix micro-blocks of the matrix B are updated cyclically, following steps may be performed: a Core0 and a Core3 broadcast half of $B_{by, 0}$ from an L2 cache to WRAMs of the Core0 and the Core3 respectively, so as to form a complete $B_{by, 0}$ in the WRAMs of the two IPU cores; and a Core1 and a Core2 broadcast half of $B_{by, 1}$ from the L2 cache to WRAMs of the Core1 and the Core2 respectively, so as to form a complete $B_{by, 1}$ in the WRAMs of the two IPU cores. As such, each IPU core completes the update of the matrix micro-blocks of the matrix B.

A scheme where the matrix A resides and the matrix B is loaded cyclically is described above. Similarly, a scheme where the matrix B resides and the matrix A is loaded cyclically may also be selected.

FIG. 10 shows a matrix multiplication operation scheme diagram according to some embodiments of the present disclosure. As shown in FIG. 10, a matrix block $B_b$ may be chosen to be resident, and a matrix block $A_b$ may be chosen to be cyclically loaded, so as to compute a result matrix block $C_b$. Each time the matrix block $A_b$ is loaded, the matrix block $A_b$ computes one block of the result matrix blocks $C_b$ together with the resident matrix block $B_b$. It may be seen that the frequency of loading the matrix block $A_b$ is $N_{BA}$ times of the frequency of loading the matrix block $B_b$, where

$N_{BA}=\lceil M/M_b \rceil$ , representing the number of matrix blocks to which the matrix B is split.

Table 3 shows logical pseudocode of a matrix multiplication operation loop process according to some embodiments of the present disclosure.

$$
\begin{aligned}
&\textbf{for } n = 0 : N_b : N - 1 \\
&\quad updating\ submatrix\ of\ B \\
&\quad \textbf{for } m = 0 : M_b : M - 1 \\
&\qquad updating\ submatrix\ of\ A \\
&\qquad \textbf{for } k = 0 : K - 1 \\
&\qquad\quad C_{mn} = C_{mn} + A_{mk} * B_{kn} \\
&\qquad \textbf{endfor} \\
&\qquad download\ C_{mn}\ to\ global\ memory \\
&\quad \textbf{endfor} \\
&\textbf{endfor}
\end{aligned}
$$

Table 3

As shown in the table 3, an outer loop is performed with a matrix block $B_b$ (whose size is $N_b$) of a matrix B as a stride; for each $B_b$, a middle loop is performed with a matrix block $A_b$ (whose size is $M_b$) of a matrix A as a stride; and specific computing of an inner loop is performed according to a K dimension.

Table 4 shows a computing pipeline diagram of a matrix multiplication operation.

| Time step | Storage controller | X-th computing cluster, y-th IPU core | | |
|---|---|---|---|---|
| 0 | Update $B_j$ and $A_0$ in L2 cache | Update $A_{m-1,x}$ (from a previous round) in L1 cache | | |
| 1 | Update $A_1$ in L2 cache | Update $B_{jy}$ and $A_{0,x}$ in L1 cache | Compute $C_{m-1,j-1,xy}$ by matrix multiplication | |
| 2 | Update $A_2$ in L2 cache | Update $A_{1,x}$ in L1 cache | Compute $C_{0j,xy}$ by matrix multiplication | Restore $C_{m-1,j-1,xy}$ |
| 3 | Update $A_3$ in L2 cache | Update $A_{2,x}$ in L1 cache | Compute $C_{1j,xy}$ by matrix multiplication | Restore $C_{0j,xy}$ |
| ...... | ...... | Update $A_{3,x}$ in L1 cache | Compute $C_{2j,xy}$ by matrix multiplication | Restore $C_{1j,xy}$ |
| m-1 | Update $A_{m-1}$ in L2 cache | ...... | Compute $C_{3j,xy}$ by matrix multiplication | Restore $C_{2j,xy}$ |
| 0 | Update $B_{j+1}$ and $A_0$ in L2 cache | Update $A_{n-1,x}$ in L1 cache | ...... | Restore $C_{3j,xy}$ |
| 1 | Update $A_1$ in L2 cache | Update $B_{j+1,y}$ and $A_{0,x}$ in L1 cache | Compute $C_{n-1,j,xy}$ by matrix multiplication | ...... |
| 2 | | | | Restore $C_{n-1,j,xy}$ |

Table 4

In this example, from the computing cluster level, a matrix block $B_j$ resides on a memory core, and matrix blocks $A_0,...,A_{m-1}$ are cyclically loaded. From the IPU core level, for a y-th IPU core in an x-th computing cluster, a matrix sub-block $B_{jy}$ may reside on a first storage circuit (such as NRAM) of the IPU core, and matrix sub-blocks $A_{0x},...,A_{n-1,x}$ may be cyclically loaded. As such, the IPU core may compute matrix multiplication results $C_{0i,xy},...,C_{n-1,j,xy}$ of the resident matrix sub-block $B_{jy}$ and the cyclically loaded matrix sub-blocks $A_{0x},...,A_{n-1,x}$, respectively. Operation results may be directly stored back to corresponding positions of the external storage circuit. A specific pipeline process may refer to the accompanying drawings and the previous description for the Table 2, and will not be repeated here.

Similarly, in the above computing pipeline, there are time steps where two matrices in the operation are required to be updated simultaneously. Since both matrices are updated simultaneously, there is no substantial difference as to which matrix resides. The method for updating the two matrices simultaneously may refer to the previous description of the scheme for the resident matrix A.

Additionally, in most of the time steps of the computing pipeline, the matrix B resides and the matrix A is required to be loaded cyclically, at this time, a data path between processing units at different levels may also be utilized to optimize a data loading process.

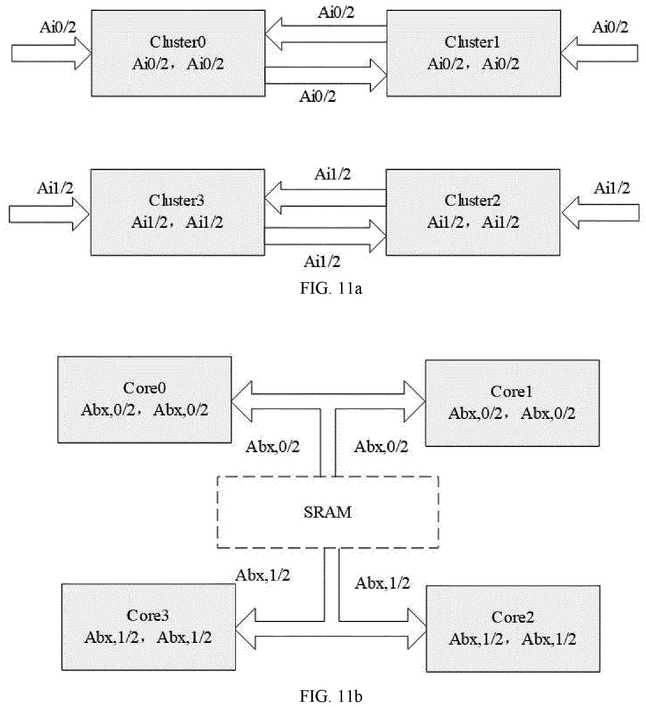

FIG. 11a shows a data loading diagram at a computing cluster level where only a matrix A is updated according to some embodiments of the present disclosure. As shown in the figure, for the computing cluster level, when a matrix B already resides and matrix sub-blocks of the matrix A are updated cyclically, following steps may be performed: a Cluster0 loads half of $A_{i0}$ from an external storage circuit (such as the DRAM 308 in FIG. 3) to a storage circuit (such as the SRAM) within this computing cluster, a Cluster1 loads the other half of the $A_{i0}$, a Cluster2 loads half of $A_{i1}$, and a Cluster3 loads the other half of $A_{i1}$. Then, the Cluster0 and the Cluster1 exchange parts of the $A_{i0}$ in their memory cores with each other, and a complete $A_{i0}$ is formed in both the Cluster0 and the Cluster1; and the Cluster2 and the Cluster3 exchange parts of the $A_{i1}$ in their memory cores with each other, and a complete $A_{i1}$ is formed in both the Cluster2 and the Cluster3. As such, each computing cluster completes the update of the matrix sub-blocks of the matrix A.

For the IPU core level, IPU cores in the same computing cluster may accelerate data loading by using a broadcast channel.

FIG. 11b shows a data loading diagram at an IPU core level where only a matrix A is updated according to some embodiments of the present disclosure. Taking the above example as an example, when a matrix B already resides and matrix micro-blocks of the matrix A are updated cyclically, following steps may be performed: a Core0 and a Core1 broadcast half of $A_{bx,0}$ from an L2 cache to NRAMs of the Core0 and the Core1 respectively, so as to form a complete $A_{bx,0}$ in the NRAMs of the two IPU cores; and a Core2 and a Core3 broadcast half of $A_{bx,1}$ from the L2 cache to NRAMs of the Core2 and the Core3 respectively, so as to form a complete $A_{bx,1}$ in the NRAMs of the two IPU cores. As such, each IPU core completes the update of the matrix micro-blocks of the matrix A.

In the description above, two examples where the matrix A resides or the matrix B resides are shown. In some embodiments, which part of data resides may be selected based on I/O data volume. It may be known from the above computing process that if the matrix A is chosen to be resident, the matrix A is only required to be loaded once, while the matrix B is required to be loaded $\lceil M/M_b \rceil$ times. Similarly, if the matrix B is chosen to be resident, the matrix B is only required to be loaded once, while the matrix A is required to be loaded $\lceil N/N_b \rceil$ times.

Therefore, in an example, when first data A is chosen to be resident, the first data A and second data B satisfy a following condition:

$$A_{size}+N_{BA}*B_{size}<N_{BB}*A_{size}+B_{size},$$

where

$A_{size}$ represents a size of the first data, and $B_{size}$ represents a size of the second data; and $N_{BA} = \lceil M/M_b \rceil$ represents the number of data blocks to which the first data is split, and $N_{BB} = \lceil N/N_b \rceil$ represents the number of data blocks to which the second data is split.

As such, by comparing I/O data volumes of the two resident methods, the resident method with the smaller I/O data volume may be selected.

Optionally or additionally, in order to improve processing efficiency, a pipeline may be adopted to perform sub-matrix multiplication computing tasks in each computing cluster, as shown in the Table 2 and Table 4 above. In these embodiments, a memory core within a computing cluster may be configured with at least two storage areas, so as to support data access between one of the storage areas and a storage unit outside the computing cluster, and at the same time, data access between the other of the storage areas and an IPU core in the computing cluster. These two storage areas may be called ping storage space and pong storage space; in other words, a pingpong pipeline method is used.

In detail, the memory core may be configured with at least two storage areas for first data (such as the matrix A) and second data (such as the matrix B) respectively, so as to support data access between one of the storage areas and a storage unit outside the computing cluster, and at the same time, data access between the other of the storage areas and an IPU core in the computing cluster. It may be known from the previous hardware architecture that a memory access interface between the memory core and the storage unit outside the computing cluster is different from a memory access interface between the memory core and the IPU core in the computing cluster. Therefore, the above parallel method may be supported, thereby forming pipeline processing.

Similarly, a storage circuit in each IPU core may also be configured with ping storage space and pong storage space to support pipeline processing.

In some embodiments, an IPU core may include a first storage circuit and a second storage circuit, where data blocks of first data are stored in the first storage circuit, and data blocks of second data are stored in the second storage circuit. By storing the first data and the second data separately on different storage circuits and using different frequencies for memory access, implementations of these two memory circuits by using different hardware may be supported, and design flexibility may be increased.

Further, the first storage circuit and the second storage circuit may be configured with at least two storage areas respectively for the first data and the second data, so as to support data access between one of the storage areas and the memory core, and at the same time, the computing processing of the IPU core on data in the other of the storage areas.

An operation result of the IPU core may be stored on one of the first storage circuit and the second storage circuit. Similarly, a storage circuit storing the operation result may also be configured with at least two storage areas for the operation result, so as to support data access between one of the storage areas and a storage circuit outside the IPU core, and at the same time, data access of the IPU core on the other of the storage areas. As such, a restoring process of the operation result is also added to the pipeline processing.

The matrix multiplication operation process of this disclosure embodiment is described above in combination with the flowchart. It may be understood that the characteristics described above for the binary operation of multi-dimensional data in combination with the hardware structure are also applicable to the method for performing the binary operation by using the computing apparatus, so related descriptions will not be repeated here. Similarly, some embodiments of the present disclosure also provide a chip and board card containing the computing apparatus configured to perform the binary operation on the multi-dimensional data above, which may contain corresponding features described above and will not be repeated here.

According to different application scenarios, an electronic device or apparatus of the present disclosure may include a server, a cloud server, a server computing cluster, a data processing apparatus, a robot, a computer, a printer, a scanner, a tablet, a smart terminal, a PC device, an Internet of Things terminal, a mobile terminal, a mobile phone, a traffic recorder, a navigator, a sensor, a webcam, a camera, a video camera, a projector, a watch, a headphone, a mobile storage, a wearable device, a visual terminal, an autonomous driving terminal, a vehicle, a household appliance, and/or a medical device. The vehicle includes an airplane, a ship, and/or a car; the household appliance includes a television, an air conditioner, a microwave oven, a refrigerator, an electric rice cooker, a humidifier, a washing machine, an electric lamp, a gas cooker, and a range hood; and the medical device includes a nuclear magnetic resonance spectrometer, a B-ultrasonic scanner, and/or an electrocardiograph. The electronic device or apparatus of the present disclosure may be further applied to Internet, Internet of Things, data center, energy, transportation, public management, manufacturing, education, power grid, telecommunications, finance, retail, construction sites, medical, and other fields. Further, the electronic device or apparatus of the present disclosure may be further used in application scenarios including cloud, edge, and terminal related to artificial intelligence, big data, and/or cloud computing. In one or a plurality of embodiments, according to the solution of the present disclosure, an electronic device or apparatus with high computing power may be applied to a cloud device (such as the cloud server), while an electronic device or apparatus with low power consumption may be applied to a terminal device and/or an edge device (such as a smart phone or the webcam). In one or a plurality of embodiments, hardware information of the cloud device is compatible with that of the terminal device and/or the edge device. As such, according to the hardware information of the terminal device and/or the edge device, appropriate hardware resources may be matched from hardware resources of the cloud device to simulate hardware resources of the terminal device and/or the edge device to complete unified management, scheduling, and collaborative work of terminal-cloud integration or cloud-edge-terminal integration.

It is required to be explained that, for the sake of brevity, the present disclosure describes some method embodiments as a series of actions and combinations thereof, but those skilled in the art may understand that the solution of the present disclosure is not limited by an order of actions described. Therefore, according to the present disclosure or under the teaching of the present disclosure, those skilled in the art may understand that some steps of the method embodiments may be performed in a different order or simultaneously. Further, those skilled in the art may understand that the embodiments described in the present disclosure may be regarded as optional embodiments; in other words, actions and units involved thereof are not necessarily required for the implementation of a certain solution or some solutions of the present disclosure. Additionally, according to different solutions, descriptions of some embodiments of the present disclosure have their own emphases. In view of this, those skilled in the art may understand that, for a part that is not described in detail in a certain embodiment of the present disclosure, reference may be made to related descriptions in other embodiments.

In terms of specific implementations, according to the present disclosure and under the teaching of the present disclosure, those skilled in the art may understand that several embodiments disclosed in the present disclosure may be implemented in other ways that are not disclosed in the present disclosure. For example, for units in the aforementioned electronic device or apparatus embodiment, the present disclosure divides the units on the basis of considering logical functions, but there may be other division methods during actual implementations. For another example, a plurality of units or components may be combined or integrated into another system, or some features or functions in the units or components may be selectively disabled. In terms of a connection between different units or components, the connection discussed above in combination with drawings may be direct or indirect coupling between the units or components. In some scenarios, the direct or indirect coupling relates to a communication connection using an interface, where the communication interface may support electrical, optical, acoustic, magnetic, or other forms of signal transmission.

In the present disclosure, units described as separate components may be or may not be physically separated. Components shown as units may be or may not be physical units. The components or units may be located in a same position or distributed to a plurality of network units. Additionally, according to actual requirements, some or all of the units may be selected for achieving the purpose of the solution described in the embodiments of the present disclosure.

Additionally, in some scenarios, the plurality of units in the embodiments of the present disclosure may be integrated into one unit, or each of the units may be physically separated.

In some other implementation scenarios, the integrated unit may be implemented in the form of hardware. The hardware may be a specific hardware circuit, which may include a digital circuit and/or an analog circuit, and the like. A physical implementation of a hardware structure of the circuit includes but is not limited to a physical component. The physical component includes but is not limited to a transistor, or a memristor, and the like. In view of this, various apparatuses (such as the computing apparatus or other processing apparatus) described in the present disclosure may be implemented by an appropriate hardware processor, such as a central processing unit (CPU), a graphics processing unit (GPU), a field-programmable gate array (FPGA), a digital signal processor (DSP), and an application-specific integrated circuit (ASIC), and the like. Further, the storage unit or the storage apparatus may be any appropriate storage medium (including a magnetic storage medium or a magneto-optical storage medium, and the like), such as a resistive random access memory (RRAM), a dynamic random access memory (DRAM ), a static random access memory (SRAM), an enhanced dynamic random access memory (EDRAM), a high bandwidth memory (HBM), a hybrid memory cube (HMC), a read only memory (ROM), and a random access memory (RAM), and the like.

The embodiments of the present disclosure have been described in detail above. The present disclosure explains principles and implementations of the present disclosure with specific examples. Descriptions of the embodiments above are only used to facilitate understanding of the method and core ideas of the present disclosure. Simultaneously, those skilled in the art may change the specific implementations and application scope of the present disclosure based on the ideas of the present disclosure. In summary, the content of this specification should not be construed as a limitation on the present disclosure.

**Claims**

1. A computing apparatus configured to perform a binary operation on multi-dimensional data, wherein the computing apparatus comprises a plurality of IPU (intelligent processing unit) cores and a memory core, and first data and second data involved in the binary operation are split into data blocks according to a specified dimension and are allocated on the plurality of IPU cores for operation processing, wherein the IPU cores are configured to:

   load a first data block of the first data from the memory core at a first frequency;
   load a second data block of the second data from the memory core at a second frequency, wherein the second frequency is R times of the first frequency, and R>1; and
   reuse each first data block of the first data R times to perform the binary operation with each respective second data block of the second data that are loaded at R consecutive times.

2. The computing apparatus of claim 1, wherein when only the second data block is loaded, each IPU core assigned to perform operation processing on the same second data block is configured to:
   send a broadcast request for broadcasting a part of the second data block from the memory core to all IPU cores that are assigned to perform operation processing on the second data block, wherein all the parts that are broadcast by the requests of respective IPU cores constitute a complete second data block.

3. The computing apparatus of any one of claims 1-2, wherein when the first data block and the second data block are loaded simultaneously, each IPU core is configured to:

   send a broadcast request for broadcasting one selected from the first data block and the second data block from the memory core to the IPU core and other IPU cores that are assigned to perform operation processing on the broadcast data block; and
   receive the broadcast data block and the other one selected from the first data block and the second data block that is broadcast by the request of another IPU core.

4. The computing apparatus of any one of claims 1-3, comprising a plurality of computing clusters, wherein each computing cluster comprises the plurality of IPU cores and the memory core, a grid interconnection circuit is provided between the plurality of computing clusters, and each computing cluster is assigned to perform part of the binary operation and is configured to:

   load the first data block of the first data from an external storage circuit to the memory core within the computing cluster at a first frequency; and
   load the second data block of the second data from the external storage circuit to the memory core within the computing cluster at a second frequency.

5. The computing apparatus of claim 4, wherein when only the second data block is loaded, each computing cluster assigned to perform operation processing on the same second data block is configured to:

load a part of the second data block from the external storage circuit to the memory core within the computing cluster; and
exchange each loaded part of the second data block with other computing clusters that are assigned to perform operation processing on the second data block through the interconnection circuit, wherein all the parts loaded by respective computing clusters from the external storage circuit constitute a complete second data block.

6. The computing apparatus of any one of claims 4-5, wherein when the first data block and the second data block are loaded simultaneously, each computing cluster is configured to:

load one data block selected from the first data block and the second data block from the external storage circuit;
transfer the one data block to other computing clusters that are assigned to process the one data block selected from the first data block and the second data block through the interconnection circuit; and
acquire the other data block from another computing cluster that is assigned to process the other data block selected from the first data block and the second data block through the interconnection circuit.

7. The computing apparatus of any one of claims 4-6, wherein

the binary operation is a matrix multiplication operation, the first data is one selected from a left-multiply matrix and a right-multiply matrix, and the second data is the other one selected from the left-multiply matrix and the right-multiply matrix; and
the left-multiply matrix is split into left-multiply matrix blocks by row dimension, and the right-multiply matrix is split into right-multiply matrix blocks by column dimension.

8. The computing apparatus of claim 7, wherein the number of the plurality of computing clusters is $CLm \times CLn$, and a matrix multiplication operation of a left-multiply matrix block and a right-multiply matrix block is assigned on the plurality of computing clusters as follows:

each left-multiply matrix block is divided into $Clm$ left-multiply matrix sub-blocks by row dimension;
each right-multiply matrix block is divided into $CLn$ right-multiply matrix sub-blocks by column dimension; and
each computing cluster is assigned to process a left-multiply matrix sub-block and a right-multiply matrix sub-block for corresponding row(s) and column(s).

9. The computing apparatus of claim 8, wherein the number of the plurality of IPU cores of each computing cluster is $CRm \times CRn$, and a matrix multiplication operation of a left-multiply matrix sub-block and a right-multiply matrix sub-block is assigned on the plurality of IPU cores as follows:

each left-multiply matrix sub-block is divided into $CRm$ left-multiply matrix micro-blocks by row dimension;
each right-multiply matrix sub-block is divided into $CRn$ right-multiply matrix micro-blocks by column dimension; and
each IPU core is assigned to process a left-multiply matrix micro-block and a right-multiply matrix micro-block.

10. The computing apparatus of any one of claims 1-9, wherein the memory core is configured with at least two storage areas respectively for the first data and the second data, so as to support data access between one of the storage areas and a storage unit outside the computing cluster, and at the same time, data access between the other of the storage areas and an IPU core in the computing cluster.

11. The computing apparatus of any one of claims 1-10, wherein the IPU core comprises a first storage circuit and a second storage circuit, wherein data blocks of the first data are stored in the first storage circuit, and data blocks of the second data are stored in the second storage circuit.

12. The computing apparatus of claim 11, wherein the first storage circuit and the second storage circuit are configured with at least two storage areas respectively for the first data and the second data, so as to support data access between one of the storage areas and the memory core, and at the same time, the computing processing of the IPU core on data in the other of the storage areas.

13. The computing apparatus of claim 12, wherein an operation result of the IPU core is stored on one of the first storage circuit and the second storage circuit, and a storage circuit storing the operation result is configured with at least two storage areas for the operation result, so as to support data access between one of the storage areas and a storage circuit outside the IPU core, and at the same time, data access of the IPU core on the other of the storage areas.

14. The computing apparatus of any one of claims 1-13, wherein first data A and second data B satisfy a following condition:

$$A_{size}+N_{BA}*B_{size}<N_{BB}*A_{size}+B_{size},$$

wherein
$A_{size}$ represents a size of the first data, $B_{size}$ represents a size of the second data, $N_{BA}$ represents the number of data blocks to which the first data is split, and $N_{BB}$ represents the number of data blocks to which the second data is split.

15. A chip, comprising the computing apparatus of any one of claims 1-14.

16. A board card, comprising the chip of claim 15.

17. A method for performing a binary operation on multi-dimensional data by using the computing apparatus of any one of claims 1-14.

FIG. 1

FIG. 2

FIG. 3

FIG. 4

FIG. 5

FIG. 6a

FIG. 6b

FIG. 7a

FIG. 7b

FIG. 8

Bj0/2 →

Cluster0
Bj0/2，Bj0/2

Bj0/2 | Bj0/2

Bj0/2 →

Cluster3
Bj0/2，Bj0/2

Cluster1
Bj1/2，Bj1/2

← Bj1/2

Bj1/2 | Bj1/2

Cluster2
Bj1/2，Bj1/2

← Bj1/2

FIG. 9a

Core0
Bby,0/2，Bby,0/2

Bby,0/2

SRAM

Bby,1/2

Core1
Bby1/2，Bby,1/2

Bby,0/2

Core3
Bby,0/2，Bby,0/2

Bby,1/2

Core2
Bby1/2，Bby,1/2

FIG. 9b

K

Mb

Nb

K

Nb

Mb

M

A

Bb

Cb

FIG. 10

Ai0/2 → | Cluster0<br>Ai0/2，Ai0/2 | ← Ai0/2<br>Ai0/2 → | Cluster1<br>Ai0/2，Ai0/2 | ← Ai0/2

Ai1/2 → | Cluster3<br>Ai1/2，Ai1/2 | ← Ai1/2<br>Ai1/2 → | Cluster2<br>Ai1/2，Ai1/2 | ← Ai1/2

FIG. 11a

| Core0<br>Abx,0/2，Abx,0/2 | ↔ | Core1<br>Abx,0/2，Abx,0/2 |

Abx,0/2      Abx,0/2

SRAM

Abx,1/2      Abx,1/2

| Core3<br>Abx,1/2，Abx,1/2 | ↔ | Core2<br>Abx,1/2，Abx,1/2 |

FIG. 11b

<div align="center">

**INTERNATIONAL SEARCH REPORT**

</div>

| | | International application No. |
|---|---|---|
| | | **PCT/CN2022/100301** |

| A. | CLASSIFICATION OF SUBJECT MATTER |
|---|---|
| | G06F 9/50(2006.01)i |
| | According to International Patent Classification (IPC) or to both national classification and IPC |

| B. | FIELDS SEARCHED |
|---|---|
| Minimum documentation searched (classification system followed by classification symbols) | |
| G06F | |

Documentation searched other than minimum documentation to the extent that such documents are included in the fields searched

Electronic data base consulted during the international search (name of data base and, where practicable, search terms used)
CNABS, DWPI, CNTXT, ENTXT, ENTXTC, CNKI: 二元运算, 处理器, 存储器, 核, 数据块, 频率, 加载, 重复, 重用, binary operation, processor, memory, core, data block, frequency, load, repeat, reuse

| C. | DOCUMENTS CONSIDERED TO BE RELEVANT | |
|---|---|---|
| Category* | Citation of document, with indication, where appropriate, of the relevant passages | Relevant to claim No. |
| X | CN 109885407 A (SHANGHAI SENSETIME INTELLIGENT TECHNOLOGY CO., LTD.) 14 June 2019 (2019-06-14) description, paragraphs [0135]-[0262] | 1-17 |
| A | CN 112433760 A (HYGON INFORMATION TECHNOLOGY CO., LTD.) 02 March 2021 (2021-03-02) entire document | 1-17 |
| A | US 2017055022 A1 (MICROSOFT TECHNOLOGY LICENSING LLC.) 23 February 2017 (2017-02-23) entire document | 1-17 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2022** | **30 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/100301**

| Patent document cited in search report | | | Publication date (day/month/year) | Patent family member(s) | | | Publication date (day/month/year) |
|---|---|---|---|---|---|---|---|
| CN | 109885407 | A | 14 June 2019 | CN | 109885407 | B | 21 September 2021 |
| CN | 112433760 | A | 02 March 2021 | None | | | |
| US | 2017055022 | A1 | 23 February 2017 | US | 11082738 | B2 | 03 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111131264